# EUROPEAN PATENT APPLICATION

(11) **EP 4 793 245 A1**
(43) Date of publication of application: **19.08.2026**
(21) Application number: 25305212.0
(22) Date of filing: 18.02.2025
(51) Int. Cl.: C03B 23/043, C03B 23/09

(54) **GLASS SYRINGE FORMATION PROCESS POWERED BY HYDROGEN COMBUSTION**

(71) Applicant: Becton Dickinson France, 38800 Le Pont-de-Claix (FR)
(72) Inventor: LAGUERRE, Anthony, 38250 Saint Nizier du Moucherotte (FR); DAVID, Olivier, 38650 SAINT MICHEL LES PORTES (FR); PAULY, Christian, 38410 SAINT-MARTIN D URIAGE (FR); MORET, Jacques, 38950 St Martin le Vinoux (FR); JAUSSAUD, Raoul, 26300 Alixan (FR)
(74) Representative: Germain Maureau

(57) **Abstract**

A process for forming a glass syringe body in which a portion of a glass tube is heated to form a heated portion, and the heated portion is manipulated using a forming tool to change the shape of the heated portion. The portion of the glass tube is heated by direct impingement by a flame of a combustion burner, the combustion burner is supplied with hydrogen gas (H₂) as a fuel and oxygen gas as an oxidant (O₂), and the ratio of hydrogen gas to oxygen gas (H₂/O₂) is 2.6-8.9. Also, a production line for the inventive process including at least one combustion burner, at least one forming tool, a conveyer for conveying the glass tube through the production line, a supply of hydrogen gas and oxygen gas to the at least one combustion burner, and an exhaust positioned at least above the at least the combustion burner.

## Description

### BACKGROUND OF THE INVENTION

### Field of the Invention

The present invention is directed to a process for forming a glass syringe body and a production line for carrying out the inventive process.

### Description of Related Art

With increasing focus on climate change mitigation and the reduction of greenhouse gas emissions, especially carbon dioxide (CO₂), the use of hydrogen gas (H₂) as a fuel for industrial heating and other applications is increasingly being considered. By replacing a carbon-based fuel, such as natural gas (CH₄), with hydrogen in an industrial heating operation utilizing combustion burners, carbon dioxide (CO₂) emissions can be eliminated. Further, if the hydrogen (H₂) is produced by electrolysis using green energy from renewable resources, such as solar and wind, any carbon dioxide (CO₂) emissions from the production of the hydrogen fuel can be eliminated, resulting in an industrial heating process with zero carbon dioxide (CO₂) emissions.

### SUMMARY OF THE INVENTION

The present invention is directed to a process for forming a glass syringe body, where the glass syringe body has a barrel having a first end, a second end, and a sidewall extending between the first end and the second end, a flange extending laterally from the first end, and a tip for receiving a needle or tip connector extending distally from the second end. A glass tube that is open on both ends is provided. A portion of the glass tube is heated to form a heated portion, and the heated portion is manipulated using a forming tool to change the shape of the heated portion. The portion of the glass tube is heated by direct impingement by a flame of a combustion burner, the combustion burner is supplied with hydrogen gas (H₂) as a fuel and oxygen gas as an oxidant (O₂), and the ratio of hydrogen gas to oxygen gas (H₂/O₂) is 2.6-8.9.

The ratio of hydrogen gas to oxygen gas (H₂/O₂) may be varied depending on a desired change in a viscosity of the glass tube and/or to adjust the maximum heating point of the flame with respect to the glass tube.

The heated portion of the glass tube may be manipulated to form the flange at a first end of the glass tube and/or the tip at a second end of the glass tube. In a flange forming step, a first portion of the glass tube at a first end of the glass tube may be heated by at least one combustion burner and manipulated by at least one forming tool to form the flange. In a tip forming step, a second portion of the glass tube at a second end of the glass tube may be heated by at least one combustion burner and manipulated by at least one forming tool to form the tip.

The fuel/oxidant (H₂/O₂) molar ratio for the at least one combustion burner used in the tip forming step may be greater than the fuel/oxidant (H₂/O₂) molar ratio for the at least one combustion burner used in the flange forming step. The fuel/oxidant (H₂/O₂) molar ratio for the at least one combustion burner used in the flange forming step may be 2.6-5.2. The fuel/oxidant (H₂/O₂) molar ratio for the combustion burner used in the tip forming step may be 3.7-8.9.

In the flange forming step and/or the tip forming step, a plurality of combustion burners and/or a plurality of forming tools may be used to heat and manipulate the glass tube. The flange forming step and/or the tip forming step, may comprise a series of sub-steps, each sub-step comprising heating and manipulating the glass tube with at least one heating/forming pair, each heating/forming pair comprising any number of combustion burners followed by any number of forming tools.

The present invention is also directed to a production line for carrying out the inventive process. The production line comprises at least one combustion burner, at least one forming tool, a conveyer for conveying the glass tube through the production line, a supply of hydrogen gas (H₂) to the at least one combustion burner, a supply of oxygen gas (O₂) to the at least one combustion burner, and an exhaust positioned at least above the at least the combustion burner. The production line may include a flange forming section comprising at least one combustion burner and at least one forming tool and a tip forming section comprising at least one combustion burner and at least one forming tool with the exhaust positioned above the at least one combustion burner of the flange forming section and the at least one combustion burner of the tip forming section.

The exhaust may be a single exhaust or a plurality of exhaust sections.

The production line may further include an electrolyzer that converts water to hydrogen gas (H₂) and oxygen gas (O₂) and conduits for supplying the hydrogen gas (H₂) and oxygen gas (O₂) to the combustion burners.

### BRIEF DESCRIPTION OF THE DRAWINGS

FIG. 1 is a cross-section of a glass syringe body produced using the inventive method and production line; and
FIG. 2 is a side view schematic of the inventive method and production line.

### DESCRIPTION OF THE INVENTION

As used herein, any numerical values are expressed using a period as a decimal point and a comma as a thousand separator, for example, 1,234 would be one thousand two hundred thirty-four, and 1.2 would be one and two tenths. "Including", "such as", "for example", and like terms means "including/such as/for example but not limited to".

For purposes of the description hereinafter, spatial orientation terms, as used, shall relate to the referenced embodiment as it is oriented in the accompanying drawings, figures, or otherwise described in the following detailed description. However, it is to be understood that the embodiments described hereinafter may assume many alternative variations and configurations. It is also to be understood that the specific components, devices, features, and operational sequences illustrated in the accompanying drawings, figures, or otherwise described herein are simply exemplary and should not be considered as limiting.

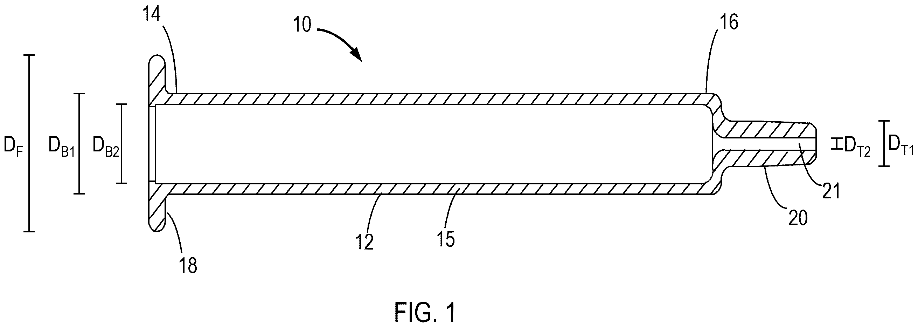

The present invention is directed to a process of forming a glass syringe body and a production line for carrying out such a process. The glass syringe body 10 (FIG. 1) has a barrel 12 having a first end 14, a second end 16, and a sidewall 15 extending between the first end 14 and the second end 16. The barrel 12 may be cylindrical. A flange 18 extends laterally from the first end 14, and a tip 20 having an inner bore 21 for receiving a needle or shaped to receive a tip connector extends distally from the second end 16. The flange 18 has an outer diameter D_{F} that is greater than an outer diameter D_{B1} of the barrel 12, the tip 20 has an outer diameter D_{T1} that is less than the outer diameter D_{B1} of the barrel 12, and the inner bore 21 of the tip 20 has a diameter D_{T2} that is less than the inner diameter D_{B2} of the barrel 12.

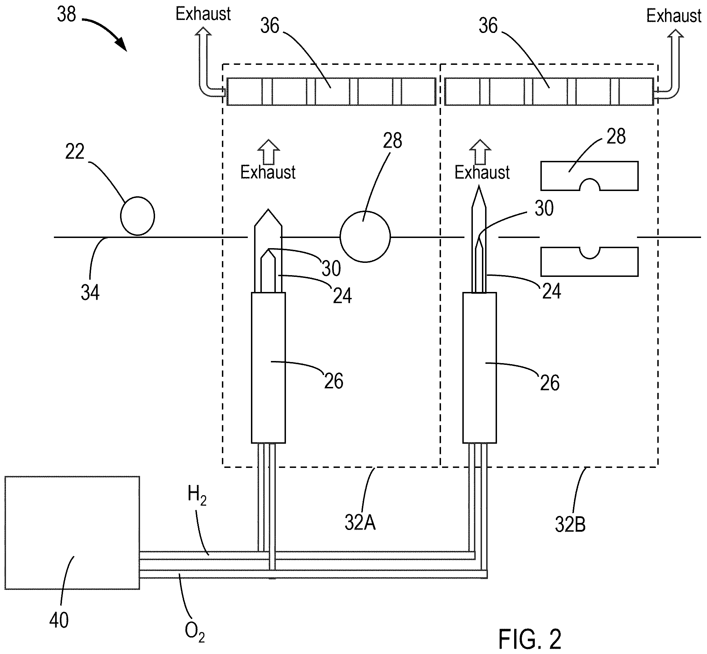

In the inventive process (FIG. 2), portions of a glass tube 22, which is open on both ends and may be cylindrical, are heated and the heated portions are manipulated to change the shape of the glass tube 22, for example, the manipulation may form the flange 18 at a first end of the glass tube 22 or the tip 20 at a second end of the glass tube 22.

The portions of the glass tube 22 are heated by direct impingement by the flame 24 of a combustion burner 26. The manipulation of the heated glass tube 22 may be performed by any suitable forming tools 28, including but not limited to, rollers, dies, cutters (knives), pins, mandrels, and wheels.

The flange forming step 32A, in which the glass tube 22 is heated and manipulated to form the flange 18 and/or the tip forming step 32B, in which the glass tube 22 is heated and manipulated to form the tip 20, may each be accomplished using at least one combustion burner 26 and at least one forming tool 28. For example, the flange forming step 32A and/or the tip forming step 32B may each be accomplished using a plurality of combustion burners 26 and/or a plurality of forming tools 28 in a series of sub-steps. The sub-steps of the flange forming step 32A may include punching, sizing, flange cutting, and/or flattening, and the sub-steps of the tip forming step may include tip cutting, first tip drafting, finishing, and/or glazing. In each sub-step, one or more combustion burners 26 heat a portion of the glass tube 22, and the heated glass tube 22 is manipulated by one or more forming tools 28. The combustion burners 26 and forming tools 28 may be provided in any order as long as the glass tube 22 is sufficiently heated prior be formed by the forming tools 28. For example, the sub-step may comprise a plurality of combustion burners 26 and a plurality of forming tools 28 arranged in heating/forming pairs, each heating/forming pair comprising any number of combustion burners 26 followed by any number of forming tools 28.

During the glass forming process, the temperature of the glass and its distribution along the barrel 12 (heating profile), the clamping force imparted on the glass by the forming tool 28, and the quantity of glass that is heated and formed are controlled to provide a defect-free glass syringe body 10 with tightened dimensional tolerances. By adjusting the properties of the flame 24 of the combustion burners 26, the temperature gradient in the heated glass tube 22 is controlled, and by controlling the temperature gradient in the glass tube 22, the viscosity gradient in the heated glass tube 22 is established. The temperature gradient and the viscosity gradient are not linear and are specifically set based on the desired finished shape of the portion of the glass tube 22 that is being heated and formed. The viscosity gradient is specific to each step, but each step "inherits" the gradient from the previous step and is managed to achieve the desired shape.

In order to control the temperature and viscosity gradients during the flange forming step 32A and the tip forming step 32B, the maximum heating point 30 (density) of the flame 24 for each combustion burner 26 may be individually adjusted by choosing an appropriate fuel, an appropriate oxidant, and an appropriate fuel/oxidant ratio for combustion.

The combustion burners 26 used for heating during the flange forming step 32A and the tip forming step 32B are provided with hydrogen gas (H₂) as a fuel and oxygen gas (O₂) as an oxidant, and combustion is carried out with a fuel rich mixture of the fuel and the oxidant. A stoichiometric fuel/oxidant mixture has the exact amount of oxidant mixed with the fuel to combust all of the fuel. When hydrogen gas (H₂) is the fuel and oxygen gas (O₂) is the oxidant, the reaction 2H₂ + O₂ → 2H₂O occurs upon combustion, and the fuel/oxidant (H₂/O₂) molar ratio is 2. In a fuel rich fuel/oxidant mixture, there is an insufficient amount of oxidant to combust all of the fuel, i.e., there is excess fuel. When hydrogen gas (H₂) is the fuel and oxygen gas (O₂) is the oxidant, a fuel rich fuel/oxidant (H₂/O₂) molar ratio is greater than 2. In the inventive process, the H₂/O₂ molar ratio is 2.6-8.9.

With the fuel rich fuel/oxidant molar ratio, the hydrogen gas (H₂) mixes and combusts with the supplied oxygen gas (O₂) rather than with the oxygen gas (O₂) in the ambient air, which influences the position of the maximum heating point 30 of the flame 24. Thus, the heating of the glass tube 22 can be influenced by adjusting the amount of excess fuel to adjust the position of the maximum heating point 30 of the flame 24 with respect to the glass tube 22. When the portion of the glass tube 22 being heated is close to the maximum heating point 30 of the flame 24, the glass tube 22 will be heated more quickly and locally, and when the portion of the glass tube 22 being heated is farther from the maximum heating point 30 of the flame 24, the glass tube 22 will be heated more slowly and diffusely. Thus, the fuel/oxidant (H₂/O₂) molar ratio is set to be more fuel rich when heating the glass tube 22 to reduce the glass viscosity and allow the glass to be formed and less fuel rich when only keeping the glass warm.

The fuel/oxidant (H₂/O₂) molar ratio for the combustion burners 26 used in the tip forming step 32B is greater than the fuel/oxidant (H₂/O₂) molar ratio for the combustion burners 26 used in the flange forming step 32A. The fuel/oxidant (H₂/O₂) molar ratio for the combustion burners 26 used in the flange forming step 32A may be 2.6-5.2, and the fuel/oxidant (H₂/O₂) molar ratio for the combustion burners 26 used in the tip forming step 32B may be 3.7-8.9.

Because no carbon is contained in the hydrogen gas (H₂) fuel, no carbon dioxide (CO₂) gas is created and exhausted to the atmosphere. Further, the excess hydrogen gas (H₂) not only provides the necessary flame density to develop the desired temperature and viscosity gradients for the forming of the glass tube 22, but also results in the combustion of the hydrogen gas (H₂) occurring more quickly, reducing the time for nitrous oxides (NOx), formed by a reaction between the oxidant and nitrogen in the ambient air, to be generated and reducing the nitrous oxides (NOx) content of the combustion exhaust gas.

The hydrogen gas (H₂) and oxygen gas (O₂) may be produced via electrolysis of water (H₂O). During the electrolysis of water to produce hydrogen gas (H₂) and oxygen gas (O₂), the water (H₂O) is subjected to electricity in an electrolytic cell having a cathode, an anode, and an electrolyte. Electricity is passed from the anode through the electrolyte to the cathode. With the passing of the electricity, hydrogen gas (H₂) is formed at the cathode and oxygen gas (O₂) is formed at the anode. Depending on the electrolyte, the reactions occurring in the electrolytic cell may be:

Cathode: 2H+ + 2e- → H₂

Anode: H₂O → ½ O₂ + 2H+ + 2e-

or may be:

Cathode: 2H₂O + 2e- → 2H+ + 2OH-

Anode: 2OH- → ½ O₂ + H₂O + 2e-.

The electricity used for the electrolysis of water (H₂O) is preferably green electricity produced from renewable energy, for example, wind or solar or from a source of carbon-free energy like nuclear power, that does not produce any carbon dioxide (CO₂). As a result, the production of the hydrogen gas (H₂) and oxygen gas (O₂) used for combustion in the inventive process does not generate any carbon dioxide (CO₂) emissions.

The production line 38 (FIG. 2) for the inventive process comprises at least one combustion burner 26 and at least one forming tool 28, a conveyer 34 for conveying the glass tube 22 through the production line 38, a supply of hydrogen gas (H₂) to the at least one combustion burner 26, a supply of oxygen gas (O₂) to the at least one combustion burner 26, and an exhaust 36 positioned above at least the at least one combustion burner 26.

The exhaust 36 is positioned above the combustion burner 26 because the excess hydrogen gas (H₂) that is not combusted will tend to rise and must be captured to avoid accumulation, which can cause an explosion or fire.

The production line 38 for the inventive process may further comprise a flange forming section 32A comprising at least one combustion burner 26 and at least one forming tool 28, a tip forming section 32B comprising at least one combustion burner 26 and at least one forming tool 28, where the exhaust 36 is positioned above at least the combustion burner(s) 26 of the flange forming section 32A and the combustion burner(s) 26 of the tip forming section 32B.

The exhaust 36 may be a pipe having a plurality of openings in the outer surface or an industrial hood. The pipe or hood may be connected to an exhaust fan or another suitable source of negative pressure to extract the combustion exhaust gas away from the combustion burners 26.

The exhaust 36 may be a single exhaust above the combustion burners 26 of the flange forming section 32A and the tip forming section 32B or may be a plurality of exhaust sections with each exhaust section over a portion of the combustions burners 26 of the flange forming section 32A and the tip forming section 32B, as shown in FIG. 2.

The production line 38 may further optionally comprise an electrolyzer 40 that converts water to hydrogen gas (H₂) and oxygen gas (O₂) and conduits for supplying the hydrogen gas (H₂) and oxygen gas (O₂) to the combustion burners 26 of the flange forming section 32A and the tip forming section 32B. The electrolyzer 40 may be supplied with green electricity. The green electricity may be generated by solar panels.

Whereas particular aspects of this invention have been described above for purposes of illustration, it will be evident to those skilled in the art that numerous variations of the details of the present invention may be made without departing from the invention.

## Claims

1. A process for forming a glass syringe body (10), wherein the glass syringe body (10) has a barrel (12) having a first end (14), a second end (16), and a sidewall (15) extending between the first end (14) and the second end (16), a flange (18) extending laterally from the first end (14), and a tip (20) for receiving a needle or tip connector extending distally from the second end (16), the process comprising:
providing a glass tube (22) that is open on both ends;
heating a portion of the glass tube (22) to form a heated portion; and
manipulating the heated portion using a forming tool (28) to change the shape of the heated portion,
wherein the portion of the glass tube (22) is heated by direct impingement by a flame (24) of a combustion burner (26), the combustion burner (26) is supplied with hydrogen gas (H₂) as a fuel and oxygen gas as an oxidant (O₂), and the ratio of hydrogen gas to oxygen gas (H₂/O₂) is 2.6-8.9.

2. The process of claim 1, wherein the ratio of hydrogen gas to oxygen gas (H₂/O₂) is varied depending on a desired change in a viscosity of the glass tube (22).

3. The process of claims 1 or 2, wherein the ratio of hydrogen gas to oxygen gas (H₂/O₂) is varied to adjust the maximum heating point (30) of the flame (24) with respect to the glass tube (22).

4. The process of any of claims 1-3, wherein the heated portion of the glass tube (22) is manipulated to form the flange (18) at a first end of the glass tube (22) and/or the tip (20) at a second end of the glass tube (22).

5. The process of any of claims 1-4, wherein, in a flange forming step (32A), a first portion of the glass tube (22) at a first end of the glass tube (22) is heated by at least one combustion burner (26) and manipulated by at least one forming tool (28) to form the flange (18), and
in a tip forming step (32B), a second portion of the glass tube (22) at a second end of the glass tube (22) is heated by at least one combustion burner (26) and manipulated by at least one forming tool (28) to form the tip (20).

6. The process of claim 5, wherein the fuel/oxidant (H₂/O₂) molar ratio for the at least one combustion burner (26) used in the tip forming step (32B) is greater than the fuel/oxidant (H₂/O₂) molar ratio for the at least one combustion burner (26) used in the flange forming step (32A).

7. The process of claims 5 or 6, wherein the fuel/oxidant (H₂/O₂) molar ratio for the at least one combustion burner (26) used in the flange forming step (32A) is 2.6-5.2.

8. The process of any of claims 5-7, wherein the fuel/oxidant (H₂/O₂) molar ratio for the at least one combustion burner (26) used in the tip forming step (32B) is 3.7-8.9.

9. The process of any of claims 5-8, wherein in the flange forming step (32A) and/or the tip forming step (32B), a plurality of combustion burners (26) and/or a plurality of forming tools (28) are used to heat and manipulate the glass tube (22).

10. The process of any of claims 5-9, wherein the flange forming step (32A) and/or the tip forming step (32B), comprise a series of sub-steps, each sub-step comprising heating and manipulating the glass tube (22) with at least one heating/forming pair, each heating/forming pair comprising any number of combustion burners (26) followed by any number of forming tools (28).

11. A production line (38) for carrying out the process of claim 1, the production line (38) comprising:
at least one combustion burner (26);
at least one forming tool (28);
a conveyer (34) for conveying the glass tube (22) through the production line (38);
a supply of hydrogen gas (H₂) to the at least one combustion burner (26);
a supply of oxygen gas (O₂) to the at least one combustion burner (26);
and an exhaust (36) positioned at least above the at least the combustion burner (26).

12. A production line (38) for carrying out the process of claim 5, the production line (38) comprising:
a flange forming section (32A) comprising at least one combustion burner (26) and at least one forming tool (28);
a tip forming section (32B) comprising at least one combustion burner (26) and at least one forming tool (28);
a conveyer (34) for conveying the glass tube (22) through the production line (38); and
an exhaust (36) positioned above the at least one combustion burner (26) of the flange forming section (32A) and the at least one combustion burner (26) of the tip forming section (32B).

13. The production line (38) of claims 11 or 12, wherein the exhaust (36) is a single exhaust or a plurality of exhaust sections.

14. The production line (38) of claims 11 or 12, further comprising an electrolyzer (40) that converts water to hydrogen gas (H₂) and oxygen gas (O₂) and conduits for supplying the hydrogen gas (H₂) and oxygen gas (O₂) to the at least one combustion burners (26).
